# EUROPEAN PATENT APPLICATION

(11) **EP 4 414 107 A1**
(43) Date of publication of application: **14.08.2024**
(21) Application number: 22878462.5
(22) Date of filing: 03.10.2022
(51) Int. Cl.: B23B 27/16, B23C 5/22

(54) **CUTTING HOLDER AND CUTTING TOOL**

(30) Priority: 05.10.2021 JP 2021163862
(71) Applicant: NTK CUTTING TOOLS CO., LTD., Komaki-shi, Aichi 485-0011 (JP)
(72) Inventor: HIROSE, Masashi, Nagoya-shi, Aichi 461-0005 (JP)
(74) Representative: J A Kemp LLP
(86) International application number: PCT/JP2022/036922
(87) International publication number: WO 2023/058593

(57) **Abstract**

A cutting holder that includes: a columnar holder main body that has, at one end in a longitudinal-direction, an insert seating surface on which a cutting insert is capable of being mounted, and that is formed with a through-hole which is open, on one side, toward the insert seating surface and is open, on the other side, toward the other end; a clamp for insert having a clamping portion that presses the cutting insert against the insert seating surface, and a first engagement portion; and a screw having a second engagement portion that is engaged with the first engagement portion, in which the clamping portion of the clamp for insert is disposed on cutting edge side with respect to the screw disposed in the through-hole, the screw rotates, so that the clamp for insert moves along a rotation axis of the screw and the clamp for insert disposed on the cutting edge side is pulled by the screw disposed on the other end side, and the clamp for insert moves toward the other end side, so that the clamping portion presses the cutting insert against the insert seating surface.

## Description

### Technical Field

The present invention relates to a cutting holder and a cutting tool.

### Background Art

A cutting tool is known in which a throw-away tip is clamped to a cutting holder (refer to, for example, Patent Document 1). In the cutting tool disclosed in Patent Document 1, a female screw is formed in a hole formed from a front side of the cutting holder, on which the throw-away tip is mounted, toward the other end side of the cutting holder. A male screw passes through a hole formed in a clamp for insert for clamping the throw-away tip from the front side and is screwed to a female screw portion. The clamp for insert is tightened by the screwing between the male screw and the female screw, thereby sliding and pressing the throw-away tip, so that the throw-away tip is fixed to the cutting holder.

### Citation List

### Patent Document

Patent Document 1: Japanese Utility Model Application Laid-Open No. S58-75616

### Summary of Invention

### Technical Problem

In the cutting tool described in Patent Document 1, a screw thread (for example, a hexagonal hole corresponding to a hexagonal wrench) for rotating the male screw is disposed on the front side. Therefore, when an object to be cut is machined by using the cutting tool, there is a concern that chips of the object to be cut may be welded to the screw threads of the male screw, making it difficult to remove the throw-away tip as a cutting insert from the cutting holder. Further, it is necessary to form a hole for allowing the male screw to penetrate the clamp for insert, and the clamp for insert becomes large in order to secure the hole. If the clamp for insert becomes large, there is a concern that the front side of the cutting tool may also become large.

The present invention has been made to solve the problems described above, and an object of the present invention is to facilitate removal of a cutting insert from a cutting tool after use and downsize the cutting tool.

### Solution to Problem

The present invention has been made to solve at least some of the problems described above, and is capable of being realized as the following aspects.
(1) According to an aspect of the present invention, there is provided a cutting holder comprising: a columnar holder main body that has, at one end in a longitudinal-direction, an insert seating surface on which a cutting insert is capable of being mounted, and that is formed with a through-hole which is open, on one side, toward the insert seating surface and is open, on the other side, toward the other end on a side opposite to the one end; a clamp for insert having a clamping portion that presses the cutting insert against the insert seating surface, and a first engagement portion connected to the clamping portion; and a screw having a second engagement portion that is engaged with the first engagement portion, in which the clamping portion of the clamp for insert is disposed on cutting edge side with respect to the screw disposed in the through-hole, the screw rotates, so that the clamp for insert moves along a rotation axis of the screw and the clamp for insert disposed on the cutting edge side is pulled by the screw disposed on the other end side, and the clamp for insert moves toward the other end side, so that the clamping portion presses the cutting insert against the insert seating surface.
   According to the configuration, the clamp for insert disposed on cutting edge side and the screw disposed on the other end side are engaged with each other in the through-hole, so that the screw moves toward the other end side in the through-hole, whereby the clamp for insert is capable of being pulled in toward the other end side. When removing the cutting insert mounted on the cutting holder, the pressing of the clamp for insert to the cutting insert is released by releasing the engagement between the clamp for insert and the screw, and the screw is capable of being removed from the other end side of the through-hole separately from the clamp for insert. That is, since the screw does not need to be disposed on cutting edge side, it is possible to suppress chips of a work material from being welded to the screw, and the screw is maintained in a state of being capable of being pulled out from the through-hole. Therefore, by using the cutting holder of the configuration, it is possible to easily remove the cutting insert from the cutting holder after the tool has been used. Further, in the configuration, after the clamp for insert disposed on cutting edge side of the through-hole is engaged with the screw disposed on the other end side of the through-hole, the clamp for insert is pulled in from the other end side of the through-hole, so that the cutting insert is fixed to the cutting holder. Therefore, unlike the related art, since a space for fixing the cutting insert to the cutting holder from cutting edge side with a screw or the like is not required, the clamp for insert is capable of being made smaller. As a result, by using the cutting holder of the configuration, the cutting tool on which the cutting insert is mounted is capable of being downsized, and even if a space for machining is small, the machining is capable of being performed by the cutting tool.
(2) According to another aspect of the present invention, there is provided a cutting holder comprising: a columnar holder main body that has, at one end in a longitudinal-direction, an insert seating surface on which a cutting insert is capable of being mounted, and that is formed with a through-hole which is open, on one side, toward the insert seating surface and is open, on the other side, toward the other end on a side opposite to the one end; and a clamp for insert having a clamping portion that presses the cutting insert against the insert seating surface, and a first screw portion connected to the clamping portion. The cutting holder further comprises a screw having a second screw portion that is screwed to the first screw portion, the through-hole has a small inner diameter portion having an inner diameter smaller than an outer diameter of the screw, the clamping portion of the clamp for insert is disposed on cutting edge side with respect to an end on the other end side of the small inner diameter portion, the screw is disposed on the other end side with respect to the small inner diameter portion, a screw portion that is a male screw, out of the first screw portion and the second screw portion, is screwed to a screw portion that is a female screw, out of the first screw portion and the second screw portion, on a deep side with respect to the end on the other end side of the small inner diameter portion when viewed from a root of the male screw, the screw rotates, so that the clamp for insert moves along a rotation axis of the screw, and the clamp for insert moves toward the other end side, so that the clamping portion presses the cutting insert against the insert seating surface.
   According to the configuration, the clamp for insert disposed on cutting edge side and the screw disposed on the other end side are screwed together in the through-hole, so that the cutting insert is mounted on the cutting holder. Therefore, when removing the cutting insert mounted on the cutting holder, the pressing of the clamp for insert to the cutting insert is released by rotating the screw from the other end side opposite to cutting edge side of the cutting holder facing a work material. That is, since the screw is not disposed on cutting edge side, it is possible to suppress chips of the work material from being welded to the screw, and the screw is maintained in a rotatable state. Therefore, by using the cutting holder of the configuration, it is possible to easily remove the cutting insert from the cutting holder after the tool has been used. Further, in the configuration, the clamp for insert disposed on cutting edge side of the through-hole is pulled in from the other end side of the through-hole by the screw disposed on the other end side of the through-hole, so that the cutting insert is fixed to the cutting holder. Therefore, unlike the related art, it is not necessary to form a screw hole for passing a screw in the clamp for insert in order to fix the cutting insert to the cutting holder with a screw or the like from cutting edge side. Since it is not necessary to form a screw hole in the clamp for insert, the clamp for insert is capable of being made smaller. As a result, by using the cutting holder of the configuration, the cutting tool on which the cutting insert is mounted is capable of being downsized, and even if a space for machining is small, the machining is capable of being performed by the cutting tool.
(3) In the cutting holder of the above aspect, the first engagement portion may be a first screw portion, the second engagement portion may be a second screw portion that is screwed to the first screw portion, and in a state where the first screw portion and the second screw portion are screwed together, the screw may rotate in a direction in which the first screw portion and the second screw portion are tightened, thereby pulling the clamp for insert toward the other end side such that the clamping portion of the clamp for insert approaches the screw.
   According to the configuration, the first screw portion and the second screw portion are screwed together, so that the clamp for insert and the screw are engaged with each other. In a state where the first screw portion and the second screw portion are screwed together, when the screw rotates in the through-hole in a direction in which the first screw portion and the second screw portion are tightened, the clamping portion of the clamp for insert moves to approaches the screw. Therefore, when the position of the screw in the through-hole is fixed, the screw rotates, so that the clamp for insert is capable of being pulled in toward the other end side.
(4) In the cutting holder of the above aspect, the through-hole may have a third screw portion, a fourth screw portion that is screwed to the third screw portion may be formed on an outer peripheral surface of the screw, and the screw may rotate to move toward the other end side in a state where the third screw portion and the fourth screw portion are screwed together, thereby moving while pulling the clamp for insert toward the other end side.
   According to the configuration, the third screw portion of the through-hole and the fourth screw portion formed on the outer peripheral surface of the screw are screwed together. Therefore, in a state where the clamp for insert and the screw are engaged with each other, when the screw rotates in a direction in which the screw moves toward the other end side, the clamp for insert moves toward the other end side together with the screw. In this way, the screw rotates, so that the clamp for insert is pulled in toward the other end side.
(5) In the cutting holder of the above aspect, the through-hole may have a third screw portion having a helical shape opposite to a helical shape in the first screw portion and the second screw portion, a fourth screw portion that is screwed to the third screw portion may be formed on an outer peripheral surface of the screw, and the screw may rotate to move toward the other end side in a state where the third screw portion and the fourth screw portion are screwed together, thereby moving while pulling the clamp for insert toward the other end side.
   According to the configuration, the third screw portion of the through-hole and the fourth screw portion formed on the outer peripheral surface of the screw are screwed together, so that the position of the screw with respect to the holder main body in which the through-hole is formed is determined. The position of the clamp for insert with respect to the screw is determined by the screwing between the first screw portion of the clamp for insert and the second screw portion formed on cutting edge side of the screw disposed in the through-hole. The third screw portion has a helical shape opposite to a helical shape in the first screw portion and the second screw portion. Therefore, even if the screw rotates in the through-hole in a direction in which the screw pulls the clamp for insert toward the other end side, the clamp for insert having the clamping portion that presses the cutting insert against the insert seating surface does not rotate in a direction of loosening the pressing force of the clamping portion. Further, in the configuration, it is not necessary to form a screw hole for passing a screw in the clamp for insert in order to fix the cutting insert to the cutting holder with a screw or the like from cutting edge side. Further, in the configuration, when forming the through-hole in the holder main body, it is not necessary to form a hole from each of cutting edge side and the other end side, and the third screw portion may be formed after the through-hole is formed from one side. As a result, since the through-hole having the third screw portion is capable of being formed in the holder main body by simple machining, the cutting holder is capable of being easily manufactured.
(6) In the cutting holder of the above aspect, in a state where the first screw portion and the second screw portion are screwed together, the screw may rotate in a direction in which the first screw portion and the second screw portion are tightened, thereby pulling the clamp for insert toward the other end side such that the clamping portion of the clamp for insert approaches the screw.
   According to the configuration, when the position of the screw in the through-hole is fixed, the screw rotates, so that the clamp for insert is capable of being pulled in toward the other end side.
(7) In the cutting holder of the above aspect, the through-hole may have a third screw portion, a fourth screw portion that is screwed to the third screw portion may be formed on an outer peripheral surface of the screw, and the screw may rotate to move toward the other end side in a state where the third screw portion and the fourth screw portion are screwed together, thereby moving while pulling the clamp for insert toward the other end side.
   According to the configuration, in a state where the clamp for insert and the screw are screwed together, when the screw rotates in a direction in which the screw moves toward the other end side, the clamp for insert moves toward the other end side together with the screw. In this way, the screw rotates, so that the clamp for insert is pulled in toward the other end side.
(8) In the cutting holder of the above aspect, the through-hole may have a third screw portion having a helical shape opposite to a helical shape in the first screw portion and the second screw portion, a fourth screw portion that is screwed to the third screw portion may be formed on an outer peripheral surface of the screw, and the screw may rotate to move toward the other end side in a state where the third screw portion and the fourth screw portion are screwed together, thereby moving while pulling the clamp for insert toward the other end side.
   According to the configuration, the third screw portion has a helical shape opposite to a helical shape in the first screw portion and the second screw portion. Therefore, even if the screw rotates in the through-hole in a direction in which the screw pulls the clamp for insert toward the other end side, the clamp for insert having the clamping portion that presses the cutting insert against the insert seating surface does not rotate in a direction of loosening the pressing force of the clamping portion. Further, in the configuration, when forming the through-hole in the holder main body, it is not necessary to form a hole from each of cutting edge side and the other end side, and the third screw portion may be formed after the through-hole is formed from one side. As a result, since the through-hole having the third screw portion is capable of being formed in the holder main body by simple machining, the cutting holder is capable of being easily manufactured.
(9) In the cutting holder of the above aspect, the through-hole may have a third screw portion having a helical shape opposite to a helical shape in the first screw portion and the second screw portion, a fourth screw portion that is screwed to the third screw portion may be formed on an outer peripheral surface of the screw, and the screw may rotate to move toward the other end side in a state where the third screw portion and the fourth screw portion are screwed together, thereby moving while pulling the clamp for insert toward the other end side.
   According to the configuration, the third screw portion has a helical shape opposite to a helical shape in the first screw portion and the second screw portion. Therefore, even if the screw rotates in the through-hole in a direction in which the screw pulls the clamp for insert toward the other end side, the clamp for insert having the clamping portion that presses the cutting insert against the insert seating surface does not rotate in a direction of loosening the pressing force of the clamping portion. Further, when forming the through-hole in the holder main body, it is not necessary to form a hole from each of cutting edge side and the other end side, and the third screw portion may be formed after the through-hole is formed from one side. As a result, since the through-hole having the third screw portion is capable of being formed in the holder main body by simple machining, the cutting holder is capable of being easily manufactured.
(10) According to another aspect of the present invention, there is provided a cutting tool. The cutting tool includes: the cutting holder according to the above aspect; and a cutting insert that is clamped by the cutting holder.
   According to the configuration, since the screw is not disposed on cutting edge side, it is possible to suppress chips of a work material from being welded to the screw. In this way, it is possible to easily remove the cutting insert from the cutting holder after the tool has been used. Further, since the clamp for insert disposed on cutting edge side of the through-hole is pulled in from the other end side of the through-hole, it is not necessary to form a screw hole in the clamp for insert, and the clamp for insert is capable of being made smaller. In this way, according to the configuration, the cutting tool is capable of being downsized.
(11) In the cutting tool of the above aspect, the cutting tool may be a rotating tool.
   According to the configuration, it is possible to make the diameter of the cutting holder small.
(12) In the cutting tool of the above aspect, the cutting tool may be a milling tool.
   According to the configuration, it is possible to make the diameter of the cutting holder small.

The present invention is capable of being realized in various aspects, and is capable of being realized in forms such as a cutting tool, a cutting holder, and a system including the cutting tool and the cutting holder, for example.

### Brief Description of Drawings

Fig. 1 is a schematic diagram of a cutting tool according to an embodiment of the present invention.
Fig. 2 is a schematic diagram of the cutting tool according to the embodiment of the present invention.
Fig. 3 is an explanatory diagram of a through-hole.
Fig. 4 is a schematic diagram of a cross section taken along line X-X in Fig. 1.
Fig. 5 is an explanatory diagram of a cutting tool according to a second embodiment.
Fig. 6 is an explanatory diagram of the cutting tool according to the second embodiment.
Fig. 7 is an explanatory diagram of the cutting tool according to the second embodiment.
Fig. 8 is a schematic diagram of a cutting tool according to a third embodiment.
Fig. 9 is a schematic diagram of the cutting tool according to the third embodiment.
Fig. 10 is an explanatory diagram of a through-hole.
Fig. 11 is a schematic diagram of a cross section taken along line Xb-Xb in Fig. 8.
Fig. 12 is an explanatory diagram of a cutting tool according to a modification example.
Fig. 13 is an explanatory diagram of a cutting tool according to a modification example.
Fig. 14 is an explanatory diagram of a cutting tool according to a modification example.

### Description of Embodiments

### <First Embodiment>

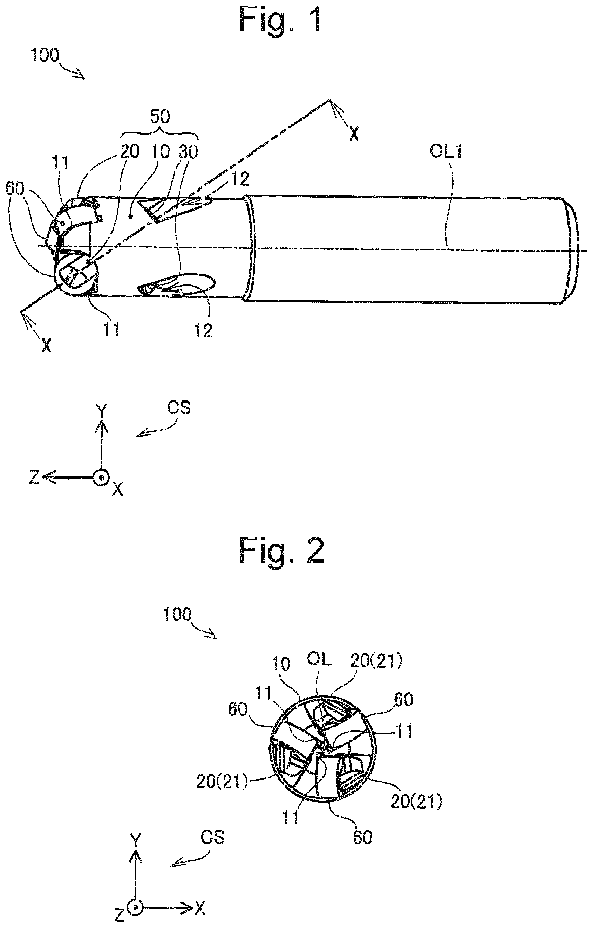

Figs. 1 and 2 are schematic diagrams of a cutting tool 100 according to an embodiment of the present invention. The cutting tool 100 of the present embodiment is a milling tool that rotates around a central axis OL1 and performs cutting on a work material with three cutting inserts 60. In the cutting tool 100 of the present embodiment, a clamping mechanism is adopted in which a clamp for insert 20 that fixes each cutting insert 60 to a cutting holder 50 is pulled in from the side (the other end side) opposite to cutting edge side facing the work material, instead of the cutting edge side, toward the cutting holder 50 side.

Fig. 1 illustrates a schematic side view of the cutting tool 100. Fig. 2 illustrates a schematic front view of the cutting tool 100 as viewed from cutting edge side along a direction of the central axis OL1. As illustrated in Figs. 1 and 2, the cutting tool 100 includes the cutting holder 50, and three cutting inserts 60 mounted on the cutting holder 50. The cutting holder 50 includes a columnar holder main body 10 extending along the central axis OL1, three presser feet 20, each of which presses each cutting insert 60 against the holder main body 10, and three screws 30. The direction along the central axis OL1 corresponds to a longitudinal direction of the holder main body 10 and the cutting tool 100. Cartesian coordinate systems CS illustrated in Figs. 1 and 2 correspond to each other.

As illustrated in Figs. 1 and 2, each cutting insert 60 of the present embodiment has the same shape and has a disk-like shape. Each cutting insert 60 is mounted on the holder main body 10 by being pressed against a planar insert seating surface 11 formed on the holder main body 10 by a clamping portion 21 of the clamp for insert 20. In other words, each cutting insert 60 is mounted on the holder main body 10 by being sandwiched between the clamping portion 21 and the insert seating surface 11 formed on cutting edge side along the central axis OL1. The material of the cutting insert 60 of the present embodiment is a hard material such as cemented carbide, cermet, or ceramic, or a material obtained by coating the surface of the hard material with a PVD (Physical Vapor Deposition) or CVD (Chemical Vapor Deposition) coating film, or the like.

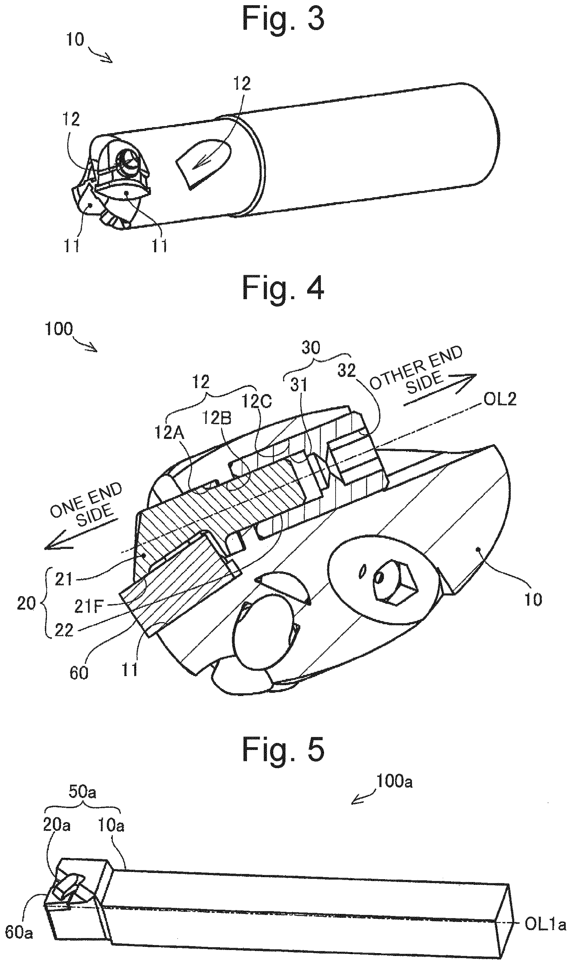

As illustrated in Fig. 1, three through-holes 12 are formed in the holder main body 10. Fig. 3 is an explanatory diagram of the through-hole 12. Fig. 3 illustrates a schematic perspective view of the holder main body 10. As illustrated in Fig. 3, each through-hole 12 penetrates from cutting edge side of the holder main body 10 to a side surface of the holder main body 10 toward the other end side. In other words, one side of the through-hole 12 is open toward the insert seating surface 11 and the other side is open toward the other end side.

Fig. 4 is a schematic diagram of a cross section taken along line X-X in Fig. 1. Fig. 4 illustrates a schematic diagram of a cross section parallel to a central axis OL2 of the through-hole 12. As illustrated in Fig. 4, the through-hole 12 has a cutting edge side large diameter portion 12A formed on cutting edge side, the other end-side large diameter portion 12C formed on the other end side, and a small diameter portion (a small inner diameter portion) 12B formed between the cutting edge side large diameter portion 12A and the other end-side large diameter portion 12C. The inner diameter of the small diameter portion 12B is relatively smaller than both the inner diameter of the cutting edge side large diameter portion 12A and the inner diameter of the other end-side large diameter portion 12C.

The clamp for insert 20 has the clamping portion 21 and a male screw portion 22 (a first screw portion) connected to the clamping portion 21 and formed with a male screw. As illustrated in Fig. 4, the clamping portion 21 is disposed in the cutting edge side large diameter portion 12A on cutting edge side with respect to the small diameter portion 12B. Further, the clamping portion 21 also has a clamping surface 21F that presses the cutting insert 60 against the insert seating surface 11. The clamping surface 21F is inclined toward the central axis OL2 of the through-hole 12 toward the other end side from cutting edge side, and presses the cutting insert 60 facing the insert seating surface 11 in a case where the clamp for insert 20 is fixed to the holder main body 10. The male screw portion 22 is inserted through the small diameter portion 12B and extends to the other end-side large diameter portion 12C.

The screw 30 has a female screw portion (a second screw portion) 31 formed with a female screw, and a tool engaging portion 32 formed on the side opposite to the female screw portion 31. As illustrated in Fig. 4, the female screw portion 31 is disposed in the other end-side large diameter portion 12C on the other end side with respect to the small diameter portion 12B to face cutting edge side. The outer diameter of the screw 30 is larger than the inner diameter of the small diameter portion 12B. The tool engaging portion 32 is, for example, a regular hexagonal groove formed such that a hexagonal wrench is fitted into the groove.

As illustrated in Fig. 4, in the cutting tool 100, the clamping portion 21 of the clamp for insert 20 is disposed in the cutting edge side large diameter portion 12A of the through-hole 12, and the male screw portion 22 is inserted through the small diameter portion 12B of the through-hole 12 and extends to the other end-side large diameter portion 12C. Therefore, the female screw portion 31 of the screw 30 is screwed to the inserted male screw portion 22 at a position (the other end-side large diameter portion 12C) on the other end side with respect to the small diameter portion 12B.

When a tool fitted into the tool engaging portion 32 of the screw 30 rotates in a state where the male screw portion 22 of the clamp for insert 20 is screwed to the female screw portion 31 of the screw 30, the screw 30 rotates around the central axis OL2 with the rotation of the tool in a state where the screw 30 is inserted into the other end-side large diameter portion 12C. When the screw 30 rotates around a side tightening the male screw portion 22 of the clamp for insert 20, the screw 30 moves toward cutting edge side along the central axis OL2, and the clamp for insert 20 moves toward the other end side along the central axis OL2.

Since the outer diameter of the screw 30 is larger than the inner diameter of the small diameter portion 12B, when the screw 30 moves by a predetermined amount toward cutting edge side, the screw 30 and the end on the other end side of the small diameter portion 12B come into contact with each other. Therefore, the movement of the screw 30 toward cutting edge side is restricted by the small diameter portion 12B. At the same time, when the clamp for insert 20 moves by a predetermined amount toward the other end side, the clamping surface 21F of the clamping portion 21 and the cutting insert 60 come into contact with each other. Therefore, the movement of the clamp for insert 20 toward the other end side is restricted by the cutting insert 60.

As illustrated in Fig. 4, the insert seating surface 11 and the clamping surface 21F of the clamping portion 21, which sandwich the disk-shaped cutting insert 60 therebetween, are inclined. Therefore, when the clamp for insert 20 is further moved toward the other end side, the clamping surface 21F presses the cutting insert 60 against the insert seating surface 11 with a stronger force.

When the screw 30 rotates around a side releasing the male screw portion 22 of the clamp for insert 20, the clamp for insert 20 moves toward cutting edge side along the central axis OL2. When the clamp for insert 20 moves toward cutting edge side, the force with which the clamping surface 21F presses the cutting insert 60 against the insert seating surface 11 becomes weaker, and the cutting insert 60 is capable of being removed from the cutting holder 50. When the screw 30 further rotates around a side releasing the male screw portion 22, the screwing between the male screw portion 22 of the clamping portion 21 and the female screw portion 31 of the screw 30 is released, and the clamp for insert 20 and the screw 30 are capable of being removed from the holder main body 10.

As described above, the cutting holder 50 of the present embodiment includes the holder main body 10 having the insert seating surface 11 and the through-hole 12, the clamp for insert 20 having the clamping portion 21 and the male screw portion 22, and the screw 30 having the female screw portion 31 to be screwed to the male screw portion 22. The insert seating surface 11 is a surface on which the cutting insert 50 is capable of being mounted on cutting edge side of the central axis OL1 that is the longitudinal direction of the holder main body 10. One side of the through-hole 12 is open toward the insert seating surface 11, and the other side is open toward the other end on the side opposite to one end. The through-hole 12 has the small diameter portion 12B that is smaller than the outer diameter of the screw 30 and relatively smaller than both the inner diameter of the cutting edge side large diameter portion 12A and the inner diameter of the other end-side large diameter portion 12C. The clamping portion 21 of the clamp for insert 20 is disposed on cutting edge side of the through-hole 12, and the male screw portion 22 of the clamp for insert 20 is inserted through the small diameter portion 12B of the through-hole 12. The screw 30 is disposed on the other end side of the through-hole 12, and the female screw portion 31 of the screw 30 is screwed to the male screw portion 22. In this state, the screw 30 rotates, so that the clamp for insert 20 moves along the central axis OL2 that is the rotation axis of the screw 30. The clamp for insert 20 moves toward the other end side along the central axis OL2, so that the clamping portion 21 presses the cutting insert 60 against the insert seating surface 11. In the cutting holder 50 of the present embodiment, when the screw 30 is rotated from the side opposite to cutting edge side of the cutting tool 100 facing a work material in order to remove the cutting insert 60 mounted on the cutting holder 50, the pressing of the clamp for insert 20 to the cutting insert 60 is released. That is, since the screw 30 is not disposed on cutting edge side, it is possible to suppress chips of the work material from being welded to the screw 30, and the screw 30 is maintained in a rotatable state. In this way, by using the cutting holder 50 of the present embodiment, it is possible to easily remove the cutting insert 60 from the cutting tool 100 after use. Further, in the cutting holder 50 of the present embodiment, the clamp for insert 20 disposed on cutting edge side of the through-hole 12 is pulled in from the other end side of the through-hole 12 by the screw 30 disposed on the other end side of the through-hole 12, so that the cutting insert 60 is fixed to the cutting holder 50. Therefore, unlike the related art, it is not necessary to form a screw hole for passing a screw in the clamp for insert 20 in order to fix the cutting insert 60 to the cutting holder 50 with a screw or the like from cutting edge side. Since it is not necessary to form a screw hole in the clamp for insert 20, the clamp for insert 20 is capable of being made smaller. As a result, by using the cutting holder 50 of the present embodiment, it is possible to downsize cutting edge side of the cutting tool 100, and even if a space for machining is small, the machining is capable of being performed by the cutting tool 100.

Further, the cutting tool 100 of the present embodiment is a milling tool in which the cutting tool 100 itself rotates. Therefore, it is possible to make the diameter of the cutting holder 50 small. The cutting tool 100 may be a rotating tool other than a milling tool.

### <Second Embodiment>

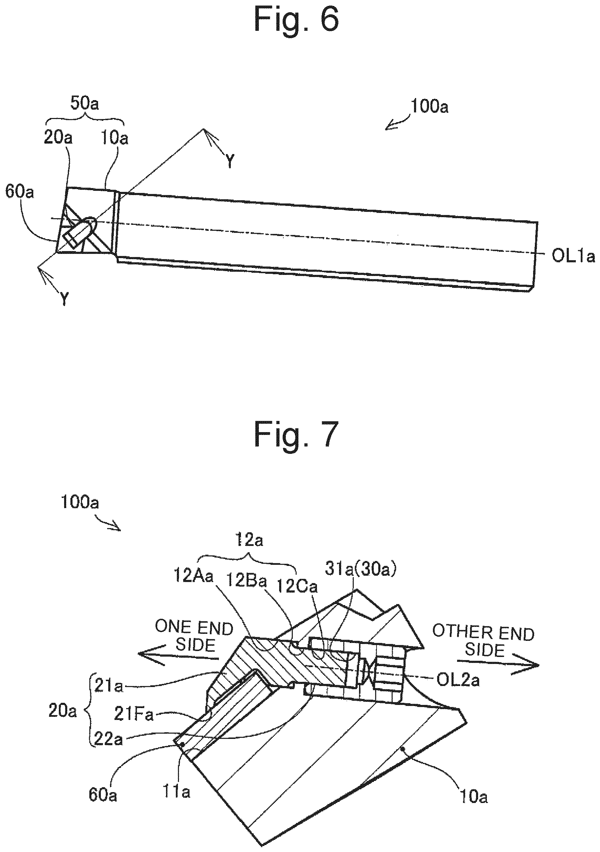

Each diagram of Figs. 5 to 7 is an explanatory diagram of a cutting tool 100a of a second embodiment. The cutting tool 100a illustrated in Figs. 5 to 7 is a lathe tool that is fixed to a comb-shaped tool rest or the like. Fig. 5 Illustrates a schematic perspective view of the cutting tool 100a, and Fig. 6 illustrates a schematic side view of the cutting tool 100a. Fig. 7 illustrates a schematic diagram of a cross section taken along line Y-Y in Fig. 6. In the second embodiment, the shape, configuration, and the like that are different from those in the first embodiment will be described, and description of the shape, configuration, and the like that are the same as those in the first embodiment will be omitted.

As illustrated in Figs. 5 and 6, the cutting tool 100a of the second embodiment includes a cutting holder 50a, and a single cutting insert 60a that is mounted on the cutting holder 50a. The cutting insert 60a has a substantially rhombic shape having a predetermined thickness. The cutting holder 50a includes a columnar holder main body 10a extending along a central axis OL1a, a clamp for insert 20a that presses the cutting insert 60a against the holder main body 10a, and a screw 30a illustrated in Fig. 7.

As illustrated in Fig. 7, the holder main body 10a is formed with a through-hole 12a having a central axis OL2a that is not parallel to the central axis OL1a of the holder main body 10a. The through-hole 12a has a cutting edge side large diameter portion 12Aa formed on cutting edge side, the other end-side large diameter portion 12Ca formed on the other end side, and a small diameter portion 12Ba formed between the cutting edge side large diameter portion 12Aa and the other end-side large diameter portion 12Ca. In the second embodiment, the entire screw 30a is accommodated in the other end-side large diameter portion 12Ca.

A male screw portion 22a located on the other end side of the clamp for insert 20a inserted from cutting edge side of the through-hole 12a is screwed to a female screw portion 31a of the screw 30a accommodated on the other end side of the through-hole 12a. In this way, the clamp for insert 20a moves along the central axis OL2a in accordance with the rotation of the screw 30a around the central axis OL2a. The force with which a clamping surface 21 Fa of a clamping portion 21a of the clamp for insert 20a presses the cutting insert 60a against an insert seating surface 11a of the holder main body 10a changes depending on the movement of the clamp for insert 20a.

The cutting tool 100a of the second embodiment is a lathe tool. For example, in a comb-shaped tool rest of a small-sized automatic lathe, there is a case where a space between tools is very narrow. In this case, if the cutting insert 60a is made of a material such as ceramic in which a screw hole is not capable of being formed, since the space is narrow, there is a concern that it may not be possible to mount a clamp for insert or a wedge necessary for clamping the cutting insert 60a. In contrast, by using the cutting tool 100a of the second embodiment, it is possible to use the cutting insert 60a, in which a screw hole is not capable of being machined, even in a comb-shaped tool rest with a narrow space, or the like.

### <Third embodiment>

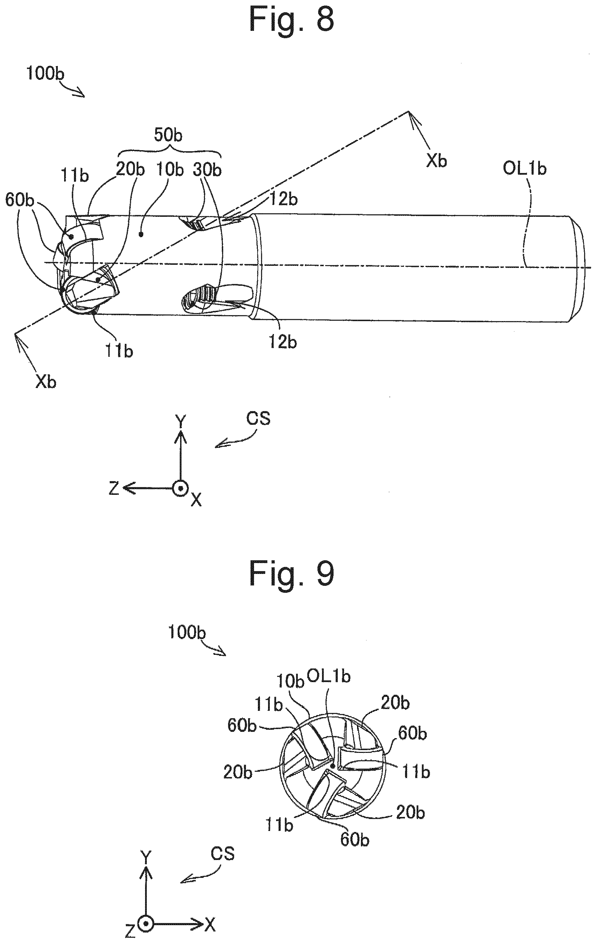

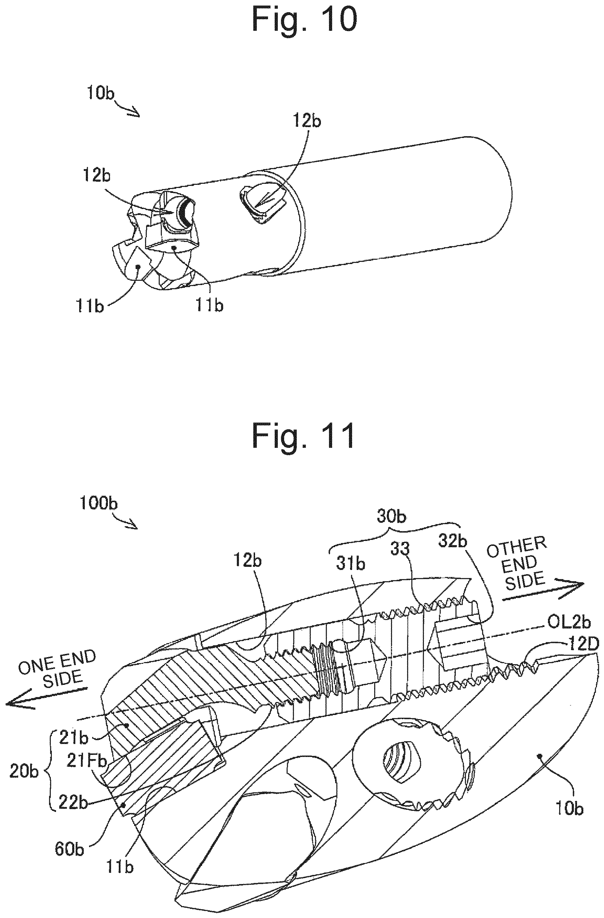

Figs. 8 and 9 are schematic diagrams of a cutting tool 100b of a third embodiment. The cutting tool 100b of the third embodiment is a milling tool that rotates around a central axis OL1b to perform cutting on a work material with three cutting inserts 60b, similar to the cutting tool 100 of the first embodiment. The cutting tool 100b of the third embodiment is different from the cutting tool 100 of the first embodiment in that a female screw portion 12D (a third screw portion) is formed in a through-hole 12b of a cutting holder 50b and that an outer peripheral screw portion (a fourth screw portion) 33 that is screwed to the female screw portion 12D is formed on the outer peripheral surface of a screw 30b, as illustrated in Fig. 11 which will be described later. In the third embodiment, a shape different from that of the cutting tool 100 of the first embodiment will be described, and description of the same shape as that in the first embodiment will be omitted.

Fig. 8 illustrates a schematic side view of the cutting tool 100b. Fig. 9 illustrates a schematic front view of the cutting tool 100b as viewed from cutting edge side along a direction of the central axis OL1b. The cutting tool 100b includes the cutting holder 50b and three cutting inserts 60b. As illustrated in Fig. 8, the through-hole 12b is formed in a holder main body 10b. The through-holes 12b are formed at three locations corresponding to three presser feet 20b illustrated in Fig. 9. The Cartesian coordinate systems CS illustrated in Figs. 8 and 9 correspond to each other.

Fig. 10 is an explanatory diagram of the through-hole 12b. Fig. 10 illustrates a schematic perspective view of the holder main body 10b. As illustrated in Fig. 3, each through-hole 12b penetrates from cutting edge side of the holder main body 10b to a side surface of the holder main body 10b toward the other end side, similar to through-holes 12 of the first embodiment.

Fig. 11 is a schematic diagram of a cross section taken along line Xb-Xb in Fig. 8. Fig. 11 illustrates a schematic diagram of a cross section parallel to a central axis OL2b of the through-hole 12b. As illustrated in Fig. 11, the female screw portion 12D is formed on the other end side of the inner peripheral surface forming the through-hole 12b. Unlike the through-hole 12 (Fig. 4) of the first embodiment, the through-hole 12b of the third embodiment does not have the cutting edge side large diameter portion 12A, the other end-side large diameter portion 12C, and the small diameter portion 12B having different inner diameters. In Fig. 11, there are the screwing between the clamp for insert 20b and the screw 30b and the screwing between the screw 30b and the female screw portion 12D of the through-hole 12b, and unevenness of the screw portions is illustrated to clarify two screwing locations.

As illustrated in Fig. 11, the clamp for insert 20b has a clamping portion 21b having a clamping surface 21Fb, and a male screw portion (a first screw portion) 22b that is located on the other end side with respect to the clamping portion 21b. The clamping surface 21Fb presses the cutting insert 60b against an insert seating surface 11b.

The screw 30b includes a female screw portion (a second screw portion) 31b that is screwed to the male screw portion 22b of the clamp for insert 20b, a tool engaging portion 32b formed on the side opposite to the female screw portion 31b, and the outer peripheral screw portion 33 formed on the outer peripheral surface of the screw 30b. As illustrated in Fig. 11, the screw 30b is disposed in the through-hole 12b such that the female screw portion 31b which is screwed to the male screw portion 22b of the clamp for insert 20b faces cutting edge side. In the third embodiment, the outer peripheral screw portion 33 is formed on the outer peripheral surface of the side where the tool engaging portion 32b is formed, out of the outer peripheral surfaces of the screw 30b. In other words, the outer peripheral screw portion 33 is formed on the outer peripheral surface of the screw 30b to be located on the other end side in a state where the screw 30b is disposed in the through-hole 12b.

In the third embodiment, a direction of a screw in the screwing between the outer peripheral screw portion 33 and the female screw portion 12D of the through-hole 12b is opposite to a direction of a screw in the screwing between the male screw portion 22b of the clamp for insert 20b and the female screw portion 31b of the screw 30b. In other words, the female screw portion 12D of the through-hole 12b has a screw portion having a helical shape opposite to a helical shape in the male screw portion 22b of the clamping surface 21Fb and the female screw portion 31b of the screw 30b.

The outer peripheral screw portion 33 of the screw 30b is screwed to the female screw portion 12D of the through-hole 12b, so that the relative position of the screw 30b with respect to the through-hole 12b, that is, the holder main body 10b, is determined. That is, the outer peripheral screw portion 33 of the screw 30b and the female screw portion 12D of the through-hole 12b function as positioning for determining the position of the screw 30b with respect to the holder main body 10b. When a tool fitted into the tool engaging portion 32b of the screw 30b rotates in a state where the outer peripheral screw portion 33 and the female screw portion 12D are screwed together, the screw 30b rotates around the central axis OL2b with the rotation of the tool and moves along the central axis OL2b by an amount corresponding to the amount of rotation. Therefore, in a state where the male screw portion 22b of the clamp for insert 20b and the female screw portion 31b of the screw 30b are screwed together, the screw 30b rotates around the central axis OL2b to move toward the other end side, so that the screw 30b moves while pulling in the clamp for insert 20b toward the other end side and the position of the screw 30b with respect to the holder main body 10b is determined.

As described above, in the cutting holder 50b of the third embodiment, the female screw portion 12D is formed on the other end side of the inner peripheral surface forming the through-hole 12b. The screw 30b has the outer peripheral screw portion 33 formed on the outer peripheral surface thereof. Therefore, in a state where the clamp for insert 20b and the screw 30b are screwed together, when the screw 30b rotates in a direction in which the screw 30b moves toward the other end side, the clamp for insert 20b moves toward the other end side together with the screw 30b. In this way, the screw 30b rotates, so that the clamp for insert 20b is capable of being pulled in toward the other end side.

Further, in the third embodiment, the female screw portion 12D of the through-hole 12b has a screw portion having a helical shape opposite to a helical shape in the male screw portion 22b of the clamping surface 21Fb and the female screw portion 31b of the screw 30b. Therefore, even if the screw 30b rotates in the through-hole 12b in the direction in which the screw 30b pulls the clamp for insert 20b toward the other end side, the clamp for insert 20b having the clamping portion 21b that presses the cutting insert 60b against the insert seating surface 11b does not rotate in the direction of loosening the pressing force of the clamping portion 21b. Further, it is not necessary to form a screw hole for passing a screw in the clamp for insert 20b in order to fix the cutting insert 60b to the cutting holder 50b from cutting edge side with a screw or the like. Further, in the configuration, when forming a through-hole in the holder main body 10b, it is not necessary to form a hole from each of the cutting edge side and the other end side, and the female screw portion 12D may be formed after the through-hole 12b is formed from one side. As a result, the through-hole 12b having the female screw portion 12D is capable of being formed in the holder main body 10b by simple machining, so that the cutting holder 50b is capable of being easily manufactured.

### <Modification Examples of the Present Embodiment>

The present invention is not limited to the embodiments described above, and is capable of being implemented in various aspects within a scope which does not depart from the gist of the invention, and for example, the following modifications are possible.

The cutting tools 100, 100a, and 100b and the cutting holders 50, 50a, and 50b of the first and second embodiments are examples, and the configurations and shapes of the cutting tools 100, 100a, and 100b and the cutting holders 50, 50a, and 50b is capable of being modified. The number of cutting inserts 60, 60a, or 60b that are mounted on the cutting holder 50, 50a, or 50b may be two, or may be four or more. For example, in a case when a plurality of cutting inserts is mounted on the cutting holder, at least one cutting insert may be mounted on the cutting holder by the configurations of the through-hole 12, 12a, or 12b, the clamp for insert 20, 20a, or 20b, and the screw 30, 30a, or 30b as in the first and second embodiments.

The central axis OL2, OL2a, or OL2b of the through-hole 12, 12a, or 12b may be parallel to the central axis OL1, OL1a, or OL2b that is the longitudinal direction of the holder main body 10, 10a, or 10b. The small diameter portion 12B or 12Ba that is formed in the through-hole 12 or 12a may be formed at an end on cutting edge side or the other end side along the central axis OL2 or OL2a. That is, the through-hole 12, 12a, or 12b may have any shape as long as it is possible to restrict the movement of the screw 30, 30a, or 30b to cutting edge side. In a case where the cutting edge side large diameter portion 12A or 12Aa is formed in the through-hole 12 or 12a, the inner diameter of the cutting edge side large diameter portion 12A or 12Aa may be determined according to the size of the clamp for insert 20 or 20a (for example, the clamping portion 21 or 21a) to be inserted. It is capable of being said that this case is a case where the cutting edge side large diameter portion 12A or 12Aa and the small diameter portion 12B or 12Ba have the same inner diameter or a case where the cutting edge side large diameter portions 12A or 12Aa is omitted. Therefore, cutting edge side with respect to the small diameter portion 12B or 12Ba is synonymous with cutting edge side with respect to the end on the other end side of the small diameter portion 12B or 12Ba.

The screw 30, 30a, or 30b does not need to have the tool engaging portion 32 or 32b formed on the side opposite to the side where the female screw portion 31, 31a, or 31b. For example, instead of the tool engaging portion 32 or 32b, a rod-shaped knob extending along the central axis OL2, OL2a, or OL2b of the screw 30, 30a, or 30b may be formed, and the screw 30, 30a, or 30b may be rotated by rotating the knob. The screw 30, 30a, or 30b is capable of being modified within a range in which the screw is rotatable such that the clamp for insert 20, 20a, or 20b moves along the central axis OL2, OL2a, or OL2b.

In the first embodiment described above, an example of the material of the cutting insert 60 is given. However, a well-known technique is capable of being applied to the shape or material of the cutting insert 60. The shape of the insert seating surface 11, 11a, or 11b for mounting the cutting insert 60, 60a, or 60b on the cutting holder 50, 50a, or 50b and the shape of the clamping surface 21F, 21Fa, or 21Fb of the clamping portion 21, 21a, or 21b may be determined according to the shape of the cutting insert 60, 60a, or 60b.

In the first to third embodiments described above, the clamp for insert 20, 20a, or 20b is provided with the male screw portion 22, 22a, or 20b, and the screw 30, 30a, or 30b is provided with the female screw portion 31, 31a, or 31b. However, as in cutting tools 100c or 100d which will be described later, a clamp for insert 20c or 20d may be formed with a female screw portion 22c or 22d, and the screw may be formed with a male screw portion 31c or 31d. That is, the clamp for insert 20c may be formed with a first screw portion which is one of a male screw and a female screw, the screw 30c may be formed with a second screw portion which is the other of the male screw and the female screw, and the screw portion that is a male screw, out of the first screw portion and the second screw portion, may be screwed to the screw portion that is a female screw, out of the first screw portion and the second screw portion, on a deep side with respect to the end on the other end side of the small diameter portion 12Bc when viewed from a root of the male screw.

The female screw portion 12D (Fig. 11) may be formed in the other end-side large diameter portion 12C (Fig. 4) of the through-hole 12 in the holder main body 10 of the first embodiment, and the outer peripheral screw portion 33 may be formed on the outer peripheral surface of the screw 30. In this modification example, the position of the screw 30 with respect to the holder main body 10 is restricted by the other end side of the small diameter portion 12B (Fig. 4) and the screwing between the female screw portion 12D of the through-hole 12 and the outer peripheral screw portion 33. Specifically, the position of the screw 30 is restricted by the screwing between the female screw portion 12D and the outer peripheral screw portion 33 until the screw 30 and the surface on the other end side of the small diameter portion 12B come into contact with each other. When the screw 30 and the surface on the other end side of the small diameter portion 12B come into contact with each other, the position of the screw 30 is restricted by the small diameter portion 12B. As described above, as the structure for restricting the position of the screw 30 with respect to the holder main body 10, there may be a plurality of structures such as the small diameter portion 12B and the screwing between the female screw portion 12D and the outer peripheral screw portion 33.

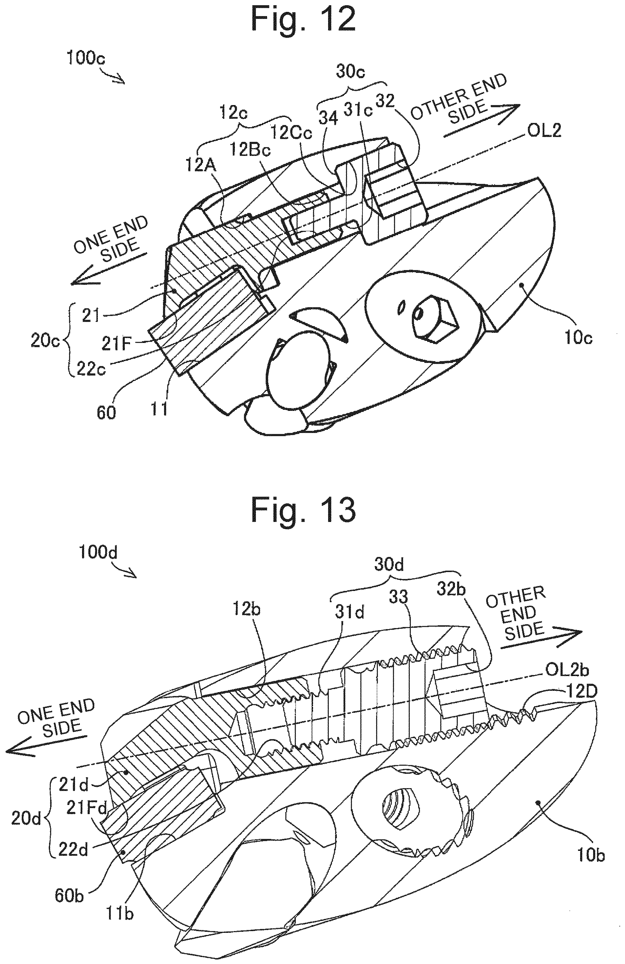

Fig. 12 is an explanatory diagram of the cutting tool 100c of a modification example. Fig. 12 illustrates a schematic cross section of the cutting tool 100c at a position corresponding to the cross section taken along line X-X in Fig. 1. The cutting tool 100c of this modification example is different from the cutting tool 100 (Fig. 4) of the first embodiment in that the male screw portion (a second screw portion) 31c of a screw 30c is screwed to the female screw portion (a first screw portion) 22c of the clamp for insert 20c. In the modification example illustrated in Fig. 12, differences from the cutting tool 100 of the first embodiment will be described.

As illustrated in Fig. 12, a holder main body 10c of this modification example is formed with a through-hole 12c penetrating along the central axis OL2. As illustrated in Fig. 12, the through-hole 12c has a cutting edge side large diameter portion 12A, which is the same as the cutting edge side large diameter portion 12A of the first embodiment, the other end-side large diameter portion 12Cc formed on the other end side, and the small diameter portion (small inner diameter portion) 12Bc formed between the cutting edge side large diameter portion 12A and the other end-side large diameter portion 12Cc. The length along the central axis OL2 of the other end-side large diameter portion 12Cc is shorter than the length of the other end-side large diameter portion 12C of the first embodiment. Instead, the length along the central axis OL2 of the small diameter portion 12Bc is longer than the length of the small diameter portion 12B of the first embodiment. In other words, in the cutting tool 100c of this modification example, the boundary between the other end-side large diameter portion 12Cc and the small diameter portion 12Bc is moved further toward the other end side than in the cutting tool 100 of the first embodiment.

As illustrated in Fig. 12, the clamp for insert 20c of this modification example has a clamping portion 21 having the same shape as the clamping portion 21 of the first embodiment, and the female screw portion 22c connected to the clamping portion 21 and formed with a female screw. The female screw portion 22c is inserted through the small diameter portion 12Bc. In the state illustrated in Fig. 12, the end portion on the other end side of the female screw portion 22c is located within the small diameter portion 12Bc and does not reach the other end-side large diameter portion 12Cc.

The screw 30c of this modification example has the male screw portion 31c that is screwed to the female screw portion 22c of the clamp for insert 20c, and the tool engaging portion 32 formed on the side opposite to the male screw portion 31c. As illustrated in Fig. 12, the outer diameter on the other end side where the tool engaging portion 32 is formed, out of the outer diameters of the screw 30c, is smaller than the inner diameter of the other end-side large diameter portion 12Cc and larger than the inner diameter of the small diameter portion 12Bc. Therefore, the position of an end surface 34 of a portion having a larger outer diameter on the other end side is restricted by the surface on the other end side of the small diameter portion 12Bc. That is, the small diameter portion 12Bc of the through-hole 12c and the end surface 34 of the screw 30c function as positioning for determining the position of the screw 30c with respect to the holder main body 10c. The screw 30c is capable of moving toward cutting edge side along the central axis OL2 to the position where the end surface 34 comes into contact with the small diameter portion 12Bc. In the first embodiment, the small diameter portion 12B of the through-hole 12 and the surface on cutting edge side out of the screw 30 in the screw 30 disposed in the through-hole 12 function as positioning for determining the position of the screw 30 with respect to the holder main body 10. The male screw portion 31c protrudes from the end surface 34 to the side opposite to the tool engaging portion 32. The outer diameter of the protruding male screw portion 31c is smaller than the inner diameter of the small diameter portion 12Bc.

As described above, as in the cutting tool 100c of the modification example illustrated in Fig. 12, the relationship between the female screw and the male screw may be reversed like the relationship between the female screw portion 22c of the clamp for insert 20c and the male screw portion 31c of the screw 30c which are screwed together. Further, in the cutting tool 100c, the female screw portion 22c of the clamp for insert 20c and the male screw portion 31c of the screw 30c are engaged with each other by screwing. In a state where the female screw portion 22c and the male screw portion 31c are screwed together, when the screw 30c rotates in the through-hole 12c in a direction in which the female screw portion 22c and the male screw portion 31c are tightened, the clamping portion 21 of the clamp for insert 20c moves to approach the screw 30c. Therefore, when the position of the screw 30c in the through-hole 12c is fixed by the small diameter portion 12Bb, the screw 30c rotates, so that the clamp for insert 20c is capable of being pulled in toward the other end side.

Fig. 13 is an explanatory diagram of the cutting tool 100d of a modification example. Fig. 13 illustrates a schematic cross section of the cutting tool 100d at a position corresponding to the cross section taken along line Xb-Xb in Fig. 8. The cutting tool 100d of this modification example is different from the cutting tool 100b (Fig. 11) of the third embodiment in that the male screw portion (a second screw portion) 31d of a screw 30d is screwed to the female screw portion (a first screw portion) 22d of the clamp for insert 20d. In the modification example illustrated in Fig. 13, differences from the cutting tool 100b of the third embodiment will be described.

As illustrated in Fig. 13, the clamp for insert 20d of this modification example has a clamping portion 21d having a clamping surface 21Fd that presses a cutting insert 60b against the insert seating surface 11b, and the female screw portion 22d connected to the clamping portion 21d and formed with a female screw. In order to form the female screw portion 22d on the other end side of the clamp for insert 20d, the shape of the clamping portion 21d connected to the female screw portion 22d is made different from the shape of the clamping portion 21b of the third embodiment.

The screw 30d of this modification example has the male screw portion 31d to be screwed to the female screw portion 22d of the clamp for insert 20d, and the tool engaging portion 32b formed on the side opposite to the male screw portion 31d. In the cutting tool 100d of this modification example, the direction of a screw in the screwing between the outer peripheral screw portion 33 and the female screw portion 12D of the through-hole 12b is opposite to the direction of a screw in the screwing between the female screw portion 22d of the clamp for insert 20d and the male screw portion 31d of the screw 30d.

As described above, as in the cutting tool 100d of the modification example illustrated in Fig. 13, the relationship between the female screw and the male screw may be reversed like the relationship between the female screw portion 22d of the clamp for insert 20d and the male screw portion 31d of the screw 30d which are screwed together. In the cutting tool 100b of the third embodiment and the cutting tool 100d of this modification example, a direction of a screw in the screwing between the clamp for insert 20b or 20d and the screw 30b or 30d and a direction of a screw in the screwing between the through-holes 12b of the holder main body 10b or 10d and the screw 30b or 30d are opposite to each other. However, the directions do not need to be opposite to each other and may be the same.

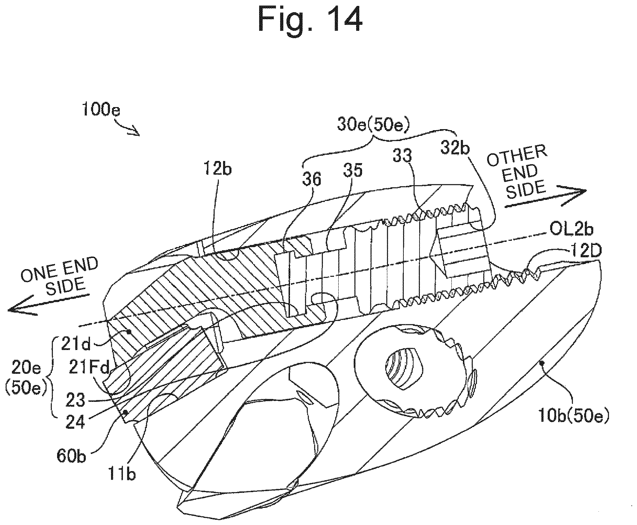

Fig. 14 is an explanatory diagram of a cutting tool 100e of a modification example. Fig. 14 illustrates a schematic cross section of the cutting tool 100e at a position corresponding to the cross section taken along line Xb-Xb in Fig. 8. The cutting tool 100e of this modification example is different from the cutting tool 100b (Fig. 11) of the third embodiment in that a clamp for insert 20e and a screw 30e are not screwed together by screw portions but fixed to each other with engagement by shapes. In the modification example illustrated in Fig. 14, differences from the cutting tool 100b of the third embodiment will be described.

As illustrated in Fig. 14, the clamp for insert 20e of this modification example has a clamping portion 21d having the same shape as the clamping portion 21d of the cutting tool 100d (Fig. 13) of the modification example, and recessed portions (first engagement portions) 23 and 24 formed on the side opposite to the clamping portion 21d. In other words, the recessed portions 23 and 24 are connected to the clamping portion 21d. The recessed portions 23 and 24 are composed of a cutting edge side recessed portion 23 that has a predetermined length along a central axis OL2b and is a space having a circular cross section, and a small diameter portion 24 that penetrates to connect the cutting edge side recessed portion 23 and the surface on the other end side of the clamp for insert 20e. The small diameter portion 24 is a through-hole having a circular cross section centered on the central axis OL2b. The cross section of the small diameter portion 24 is smaller than the cross section of the cutting edge side recessed portion 23.

The screw 30e of this modification example has the outer peripheral screw portion 33, the tool engaging portion 32b, and protrusion portions (second engagement portions) 35 and 36 formed on cutting edge side that is the side opposite to the tool engaging portion 32b. The protrusion portions 35 and 36 include a disk-shaped flange portion 36 formed on the tip side, and a connection portion 35. As illustrated in Fig. 14, the connection portion 35 connects the flange portion 36 to the other end side of the screw 30e where the outer peripheral screw portion 33 and the tool engaging portion 32b are formed. The connection portion 35 has a columnar shape having a circular cross section and extending along the central axis OL2b. The shape of the flange portion 36 is the same shape as the cutting edge side recessed portion 23 of the clamp for insert 20e. Further, the diameter of the cross section of the connection portion 35 is the same as the diameter of the small diameter portion 24 of the clamp for insert 20e. Further, the length along the central axis OL2b of the connection portion 35 is longer than the length of the small diameter portion 24 of the clamp for insert 20e. Therefore, as illustrated in Fig. 14, the recessed portions 23 and 24 formed on the other end side of the clamp for insert 20e and the protrusion portions 35 and 36 formed on cutting edge side of the screw 30e are engaged with each other. When the recessed portions 23 and 24 and the protrusion portions 35 and 36 are engaged with each other, the clamp for insert 20e and the screw 30e are capable of integrally moving along the central axis OL2b.

In the cutting tool 100e of this modification example, the engagement between the clamp for insert 20e and the screw 30e is capable of being released. Therefore, in a case of fixing the cutting insert 60b to the holder main body 10b, the screw 30e is first inserted from the other end side of the through-hole 12b and moved to cutting edge side by rotating the screw 30e around the central axis OL2b. Thereafter, the clamp for insert 20e is inserted from cutting edge side of the through-hole 12b, and the recessed portions 23 and 24 of the clamp for insert 20e are engaged with the protrusion portions 35 and 36 of the screw 30e inserted from the other end side of the through-hole 12b. The clamp for insert 20e and the screw 30e after the engagement move toward the other end side along the central axis OL2b, so that the clamping portion 21d of the clamp for insert 20e presses the cutting insert 60b against the insert seating surface 11b. In this way, the cutting insert 60b is fixed to the holder main body 10b.

In the cutting tool 100e of this modification example, the clamp for insert 20d has the clamping portion 21d and the recessed portions 23 and 24 connected to the clamping portion 21d. Further, the screw 30d has the protrusion portions 35 and 36 that are engaged with the recessed portions 23 and 24. Therefore, in the cutting tool 100e of this modification example, the clamp for insert 20e disposed on cutting edge side and the screw 30e disposed on the other end side are engaged with each other in the through-hole 12b. In this way, the clamp for insert 20e is capable of being pulled in toward the other end side by moving the screw 30e toward the other end side in the through-hole 12b. When removing the cutting insert 60b mounted on a cutting holder 50e, the pressing of the clamp for insert 20e to the cutting insert 60b is released by releasing the engagement between the clamp for insert 20e and the screw 30e. Further, the screw 30e is capable of being removed from the other end side of the through-hole 12b separately from the clamp for insert 20e. That is, since the screw 30e does not need to be disposed on cutting edge side, it is possible to suppress chips of the work material from being welded to the screw 30e, and the screw 30e is maintained in a state of being capable of being pulled out from the through-hole 12b. Therefore, by using the cutting holder 50e of this modification example, it is possible to easily remove the cutting insert 60b from the cutting holder 50e after the tool has been used. Further, in this modification example, after the clamp for insert 20e disposed on cutting edge side of the through-hole 12b is engaged with the screw 30e disposed on the other end side of the through-hole 12b, the clamp for insert 20e is pulled in from the other end side of the through-hole 12b, so that the cutting insert 60b is fixed to the cutting holder 50e. Therefore, unlike the related art, since a space for fixing the cutting insert 60b to the cutting holder 50e from cutting edge side with a screw or the like is not required, the clamp for insert 20e is capable of being made smaller. As a result, by using the cutting holder 50e of this modification example, the cutting tool 100e on which the cutting insert 60b is mounted is capable of being downsized, and even if the space for machining is small, the machining is capable of being performed by the cutting tool 100e.

In the cutting tool 100e of this modification example, as an example of the shape for the engagement between the clamp for insert 20e and the screw 30e, the engagement between the recessed portions 23 and 24 of the clamp for insert 20e and the protrusion portions 35 and 36 of the screw 30e has been described. However, the shape for the engagement is capable of being modified within the range of well-known technology. For example, instead of the recessed portions 23 and 24 that are shaped to be engaged, protrusion portions may be formed in the clamp for insert 20e, and as the shape for engagement with the protrusion portions formed on the clamp for insert 20e, recessed portions may be formed in the screw 30e instead of the protrusion portions 35 and 36. The unevenness for the engagement between the clamp for insert 20e and the screw 30e is capable of being simply formed by cutting or the like. Further, in the cutting tool 100b of the third embodiment and the cutting tools 100d and 100e of the modification examples, an example of the outer peripheral screw portion 33 that is formed on the outer peripheral surface of the screw 30b, 30d, or 30e has been described. However, the position of the outer peripheral screw portion 33 that is formed on the screws 30b, 30d, or 30e is capable of being modified. The outer peripheral screw portion 33 may be formed to be located on cutting edge side in a state where the screw 30b, 30d, or 30e is inserted into the through-holes 12b. The outer peripheral screw portion 33 may be set as appropriate according to the position of the female screw portion 12D formed in the through-hole 12b.

It is preferable that either the engagement between the clamp for insert 20 and the screw 30 or the positioning of the screw 30 with respect to the holder main body 10 is configured by screwing of screws. For example, in the first embodiment (Fig. 4), the clamp for insert 20 and the screw 30 are screwed together, in the third embodiment (Fig. 11), the engagement and positioning mechanism between the clamp for insert 20b and the screw 30b are screwed together, and in the cutting tool 100e of the modification example (Fig. 14), the positioning mechanisms are screwed together. Due to the presence of such screwing of screws, the force with which the clamping portion 21 of the screw 30 presses the insert 60 against the insert seating surface 11 is capable of being adjusted according to the amount of rotation of the screw 30.

The present aspect has been described above based on the embodiments and the modification examples. However, the embodiments of the aspect described above are intended to facilitate understanding of the present aspect, and do not limit the present aspect. The present aspect may be modified or improved without departing from the gist thereof and the scope of the claims, and the present aspect also includes equivalents thereof. Further, if the technical features are not described as essential in this specification, the features are capable of being appropriately deleted.

The present invention can also be realized in the following forms.

### [Application Example 1]

A cutting holder includes:
a columnar holder main body that has, at one end in a longitudinal-direction, an insert seating surface on which a cutting insert is capable of being mounted, and that is formed with a through-hole which is open, on one side, toward the insert seating surface and is open, on the other side, toward the other end on a side opposite to the one end;
a clamp for insert having a clamping portion that presses the cutting insert against the insert seating surface, and a first engagement portion connected to the clamping portion; and
a screw having a second engagement portion that is engaged with the first engagement portion,
in which the clamping portion of the clamp for insert is disposed on cutting edge side with respect to the screw disposed in the through-hole,
the screw rotates, so that the clamp for insert moves along a rotation axis of the screw and the clamp for insert disposed on the cutting edge side is pulled by the screw disposed on the other end side, and
the clamp for insert moves toward the other end side, so that the clamping portion presses the cutting insert against the insert seating surface.

### [Application Example 2]

A cutting holder includes:
a columnar holder main body that has, at one end in a longitudinal-direction, an insert seating surface on which a cutting insert is capable of being mounted, and that is formed with a through-hole which is open, on one side, toward the insert seating surface and is open, on the other side, toward the other end on a side opposite to the one end;
a clamp for insert having a clamping portion that presses the cutting insert against the insert seating surface, and a first screw portion connected to the clamping portion; and
a screw having a second screw portion that is screwed to the first screw portion,
in which the through-hole has a small inner diameter portion having an inner diameter smaller than an outer diameter of the screw,
the clamping portion of the clamp for insert is disposed on cutting edge side with respect to an end on the other end side of the small inner diameter portion,
the screw is disposed on the other end side with respect to the small inner diameter portion,
a screw portion that is a male screw, out of the first screw portion and the second screw portion, is screwed to a screw portion that is a female screw, out of the first screw portion and the second screw portion, on a deep side with respect to the end on the other end side of the small inner diameter portion when viewed from a root of the male screw,
the screw rotates, so that the clamp for insert moves along a rotation axis of the screw, and
the clamp for insert moves toward the other end side, so that the clamping portion presses the cutting insert against the insert seating surface.

### [Application Example 3]

In the cutting holder according to Application Example 1 or 2,
the first engagement portion is a first screw portion,
the second engagement portion is a second screw portion that is screwed to the first screw portion, and
in a state where the first screw portion and the second screw portion are screwed together, the screw rotates in a direction in which the first screw portion and the second screw portion are tightened, thereby pulling the clamp for insert toward the other end side such that the clamping portion of the clamp for insert approaches the screw.

### [Application Example 4]

In the cutting holder according to any one of Application Examples 1 to 3,
the through-hole has a third screw portion,
a fourth screw portion that is screwed to the third screw portion is formed on an outer peripheral surface of the screw, and
the screw rotates to move toward the other end side in a state where the third screw portion and the fourth screw portion are screwed together, thereby moving while pulling the clamp for insert toward the other end side.

### [Application Example 5]

In the cutting holder according to any one of Application Examples 1 to 4,
the through-hole has a third screw portion having a helical shape opposite to a helical shape in the first screw portion and the second screw portion,
a fourth screw portion that is screwed to the third screw portion is formed on an outer peripheral surface of the screw, and
the screw rotates to move toward the other end side in a state where the third screw portion and the fourth screw portion are screwed together, thereby moving while pulling the clamp for insert toward the other end side.

### [Application Example 6]

In the cutting holder according to any one of Application Examples 1 to 5,
in a state where the first screw portion and the second screw portion are screwed together, the screw rotates in a direction in which the first screw portion and the second screw portion are tightened, thereby pulling the clamp for insert toward the other end side such that the clamping portion of the clamp for insert approaches the screw.

### [Application Example 7]

In the cutting holder according to any one of Application Examples 1 to 6,
the through-hole has a third screw portion,
a fourth screw portion that is screwed to the third screw portion is formed on an outer peripheral surface of the screw, and
the screw rotates to move toward the other end side in a state where the third screw portion and the fourth screw portion are screwed together, thereby moving while pulling the clamp for insert toward the other end side.

### [Application Example 8]

In the cutting holder according to any one of Application Examples 1 to 7,
the through-hole has a third screw portion having a helical shape opposite to a helical shape in the first screw portion and the second screw portion,
a fourth screw portion that is screwed to the third screw portion is formed on an outer peripheral surface of the screw, and
the screw rotates to move toward the other end side in a state where the third screw portion and the fourth screw portion are screwed together, thereby moving while pulling the clamp for insert toward the other end side.

### [Application Example 9]

In the cutting holder according to any one of Application Examples 1 to 8,
the through-hole has a third screw portion having a helical shape opposite to a helical shape in the first screw portion and the second screw portion,
a fourth screw portion that is screwed to the third screw portion is formed on an outer peripheral surface of the screw, and
the screw rotates to move toward the other end side in a state where the third screw portion and the fourth screw portion are screwed together, thereby moving while pulling the clamp for insert toward the other end side.

### [Application Example 10]

A cutting tool includes:
the cutting holder according to any one of Application Examples 1 to 9; and
a cutting insert that is clamped by the cutting holder.

### [Application Example 11]

In the cutting tool according to any one of Application Examples 1 to 10,
the cutting tool is a rotating tool.

### [Application Example 12]

In the cutting tool according to any one of Application Examples 1 to 11,
the cutting tool is a milling tool.

### Reference Signs List

10,10a, 10b, 10c: holder main body
11, 11a, 11b: Insert seating surface
12, 12a, 12b, 12c: through-hole
12A, 12Aa: cutting edge side large diameter portion
12B, 12Ba, 12Bc: small diameter portion (small inner diameter portion)
12C, 12Ca, 12Cc: other end-side large diameter portion
20, 20a, 20b, 20c, 20d, 20e: clamp for insert
21, 21a, 21b, 21d: clamping portion
21F, 21Fa, 21Fb, 21Fd: clamping surface
22, 22a, 22b: male screw portion (first screw portion)
22c, 22d: female screw portion (first screw portion)
23: cutting edge side recessed portion (first engagement portion)
24: small diameter portion (first engagement portion)
30, 30a, 30b, 30c, 30d, 30e: screw
31, 31a, 31b: female screw portion (second screw portion)
31c, 31d: male screw portion (second screw portion)
32, 32b: tool engaging portion
33: outer peripheral screw portion (fourth screw portion)
34: end surface
35: connection portion (second engagement portion)
36: flange portion (second engagement portion)
50, 50a, 50e: cutting holder
60, 60a, 60b: cutting insert
100, 100a, 100b, 100c, 100d, 100e: cutting tool
CS: Cartesian coordinate system
OL1, OL1a: central axis of holder main body
OL2, OL2a, OL2b: central axis of through-hole

## Claims

1. A cutting holder comprising:
a columnar holder main body that has, at one end in a longitudinal-direction, an insert seating surface on which a cutting insert is capable of being mounted, and that is formed with a through-hole which is open, on one side, toward the insert seating surface and is open, on the other side, toward the other end on a side opposite to the one end;
a clamp for insert having a clamping portion that presses the cutting insert against the insert seating surface, and a first engagement portion connected to the clamping portion; and
a screw having a second engagement portion that is engaged with the first engagement portion,
wherein the clamping portion of the clamp for insert is disposed on cutting edge side with respect to the screw disposed in the through-hole,
the screw rotates, so that the clamp for insert moves along a rotation axis of the screw and the clamp for insert disposed on the cutting edge side is pulled by the screw disposed on the other end side, and
the clamp for insert moves toward the other end side, so that the clamping portion presses the cutting insert against the insert seating surface.

2. A cutting holder comprising:
a columnar holder main body that has, at one end in a longitudinal-direction, an insert seating surface on which a cutting insert is capable of being mounted, and that is formed with a through-hole which is open, on one side, toward the insert seating surface and is open, on the other side, toward the other end on a side opposite to the one end;
a clamp for insert having a clamping portion that presses the cutting insert against the insert seating surface, and a first screw portion connected to the clamping portion; and
a screw having a second screw portion that is screwed to the first screw portion,
wherein the through-hole has a small inner diameter portion having an inner diameter smaller than an outer diameter of the screw,
the clamping portion of the clamp for insert is disposed on cutting edge side with respect to an end on the other end side of the small inner diameter portion,
the screw is disposed on the other end side with respect to the small inner diameter portion,
a screw portion that is a male screw, out of the first screw portion and the second screw portion, is screwed to a screw portion that is a female screw, out of the first screw portion and the second screw portion, on a deep side with respect to the end on the other end side of the small inner diameter portion when viewed from a root of the male screw,
the screw rotates, so that the clamp for insert moves along a rotation axis of the screw, and
the clamp for insert moves toward the other end side, so that the clamping portion presses the cutting insert against the insert seating surface.

3. The cutting holder according to claim 1,
wherein the first engagement portion is a first screw portion,
the second engagement portion is a second screw portion that is screwed to the first screw portion, and
in a state where the first screw portion and the second screw portion are screwed together, the screw rotates in a direction in which the first screw portion and the second screw portion are tightened, thereby pulling the clamp for insert toward the other end side such that the clamping portion of the clamp for insert approaches the screw.

4. The cutting holder according to claim 1,
wherein the through-hole has a third screw portion,
a fourth screw portion that is screwed to the third screw portion is formed on an outer peripheral surface of the screw, and
the screw rotates to move toward the other end side in a state where the third screw portion and the fourth screw portion are screwed together, thereby moving while pulling the clamp for insert toward the other end side.

5. The cutting holder according to claim 3,
wherein the through-hole has a third screw portion having a helical shape opposite to a helical shape in the first screw portion and the second screw portion,
a fourth screw portion that is screwed to the third screw portion is formed on an outer peripheral surface of the screw, and
the screw rotates to move toward the other end side in a state where the third screw portion and the fourth screw portion are screwed together, thereby moving while pulling the clamp for insert toward the other end side.

6. The cutting holder according to claim 2,
wherein in a state where the first screw portion and the second screw portion are screwed together, the screw rotates in a direction in which the first screw portion and the second screw portion are tightened, thereby pulling the clamp for insert toward the other end side such that the clamping portion of the clamp for insert approaches the screw.

7. The cutting holder according to claim 2,
wherein the through-hole has a third screw portion,
a fourth screw portion that is screwed to the third screw portion is formed on an outer peripheral surface of the screw, and
the screw rotates to move toward the other end side in a state where the third screw portion and the fourth screw portion are screwed together, thereby moving while pulling the clamp for insert toward the other end side.

8. The cutting holder according to claim 2,
wherein the through-hole has a third screw portion having a helical shape opposite to a helical shape in the first screw portion and the second screw portion,
a fourth screw portion that is screwed to the third screw portion is formed on an outer peripheral surface of the screw, and
the screw rotates to move toward the other end side in a state where the third screw portion and the fourth screw portion are screwed together, thereby moving while pulling the clamp for insert toward the other end side.

9. The cutting holder according to claim 6,
wherein the through-hole has a third screw portion having a helical shape opposite to a helical shape in the first screw portion and the second screw portion,
a fourth screw portion that is screwed to the third screw portion is formed on an outer peripheral surface of the screw, and
the screw rotates to move toward the other end side in a state where the third screw portion and the fourth screw portion are screwed together, thereby moving while pulling the clamp for insert toward the other end side.

10. A cutting tool comprising:
the cutting holder according to any one of claims 1 to 9; and
a cutting insert that is clamped by the cutting holder.

11. The cutting tool according to claim 10,
wherein the cutting tool is a rotating tool.

12. The cutting tool according to claim 11,
wherein the cutting tool is a milling tool.
